# EUROPÄISCHE PATENTSCHRIFT

(11) **EP 1 008 491 B1**
(45) Veröffentlichungstag und Bekanntmachung des Hinweises auf die Patenterteilung: **17.03.2004**
(21) Anmeldenummer: 99123708.2
(22) Anmeldetag: 29.11.1999
(51) Int. Cl.: B60R 9/06, B60R 9/10

(54) **Kupplungsgebundener Fahrzeugheckträger**
Rear vehicle hitch carrier
Porte-bagages arrière sur crochet d'attelage de véhicule

(30) Priorität: 09.12.1998 DE 19856848
(43) Veröffentlichungstag der Anmeldung: 14.06.2000
(73) Patentinhaber: MFT - Transport Systeme GmbH, 74532 Ilshofen (DE)
(72) Erfinder: Pesch, Michael, 74532 Ilshofen (DE); Bohn, Peter, 74532 Ilshofen (DE)
(74) Vertreter: Kühn, Alexander

(56) Entgegenhaltungen:
- FR-A- 418 820
- FR-A- 439 696
- FR-A- 439 838
- FR-A- 556 603
- FR-E- 59 680
- GB-A- 641 393
- US-A- 1 585 871
- US-A- 1 886 911
- US-A- 5 884 826

## Beschreibung

Die vorliegende Erfindung betrifft einen Fahrzeugheckträger der kupplungsgebundenen Bauart gemäß dem Oberbegriff des Patentanspruchs 1.

Aus dem Stand der Technik, beispielsweise gemäß der gattungsbildenden DE-PS 43 37 006 C2 ist eine Vorrichtung zum Transport von Lasten an Kraftfahrzeugen mit Kugelkopfkupplungen bekannt. Diese Vorrichtung hat u.a. ein Kupplungselement, welches mit dem Kugelkopf einer fahrzeugseitigen Anhängerkupplung in Eingriff bringbar ist und derart ausgeformt ist, daß die Transportvorrichtung am Kugelkopf kipp- bzw. drehsicher fixiert werden kann. An dem Kupplungselement befindet sich ferner eine manuell betätigbare Justiereinrichtung, mittels der die Horizontalposition der Transportvorrichtung einstellbar ist, ohne daß das Kupplungselement vom Kugelkopf der fahrzeugseitigen Kupplung gelöst werden muß.

Die Vorrichtung selbst besteht im wesentlichen aus einem einzigen Teleskoptragarm in Form eines Hohlprofils, der an seinem einen Ende an dem Kupplungselement angeschweißt ist. Der Teleskoptragarm hat ein großdurchmessriges Tragrohr, in welchem zumindest ein weiteres kleindurchmessriges Tragrohr ausziehbar eingesetzt und axial geführt ist. An beiden Tragrohren sind Halterungen zur Befestigung von zu transportierenden Lasten angeschweißt, die sich senkrecht zu den Tragrohren erstrecken. Schließlich ist an dem einen Tragrohr mit dem größeren Durchmesser eine Arretiereinrichtung in Form zweier Klemmschrauben vorgesehen, die gegen das kleindurchmessrige Tragrohr angelegt werden können, um somit die Relativposition beider Tragrohre zu fixieren.

Die vorstehend beschriebene Vorrichtung ist dafür vorgesehen, bei Bedarf, d.h. im Fall des Transports einer Last in Fahrzeuglängsrichtung ausgezogen zu werden, um so eine ausreichende Auflagerfläche entlang des Teleskoptragarms bereit zu stellen. Im ungenutzten Zustand kann die Vorrichtung, d.h. die beiden Tragrohre teleskopartig zusammengeschoben werden, um so geringere und kompaktere Baumaße zu erreichen. Die so zusammengeschobene Vorrichtung kragt geringer über das Fahrzeugheck aus und wirkt so weniger störend beim normalen Fahrbetrieb insbesondere beim Einparken und dergleichen Rückwärtsfahrmanövern.

In dessen hat die bekannte Vorrichtung gemäß dem vorstehend genannten Stand der Technik funktionelle Nachteile, die den Gebrauch der Vorrichtung behindern.

Die Teleskopausführung des Tragarms ist zwar insofern günstig, als daß sich sämtliche An- oder Aufbauten, die an den Tragrohren angeschweißt sind, nur in eine Richtung, nämlich in Fahrzeuglängsrichtung bewegen und sich somit immer in der richtigen Relativlage zueinander befinden. Der Teleskopaufbau erfordert jedoch eine exakte Führung, um im Fahrbetrieb ein unangenehmes Klappern und Vibrieren der Vorrichtung zu vermeiden und einem sich Verklemmen der verschiebbaren Tragrohre vorzubeugen. Das heckseitige Anordnen der Vorrichtung hat ferner eine starke Schmutzbeaufschlagung in folge aufgeschleudertem Fahrbahnschmutz zur Folge, der den Teleskopmechanismus funktionsunfähig machen kann. Schließlich sei noch darauf hingewiesen, daß der Teleskopmechanismus zwar ein Verkleinern der Baugröße ermöglicht, wobei dieser Verkleinerung jedoch dann eine Grenze gesetzt ist, wenn die Anoder Aufbauten an den ineinander schiebbaren Tragrohren unmittelbar hintereinander zu liegen kommen.

Angesichts dieses Stands der Technik ist es eine Aufgabe der vorliegenden Erfindung, einen Größe variablen Fahrzeugheckträger der kupplungsgebundenen Bauart zu schaffen, der eine höhere Funktionalität bei erhöhter Funktionssicherheit aufweist.

Diese Aufgabe wird mittels eines Fahrzeugheckträgers mit den Merkmalen gemäß dem Patentanspruch 1 gelöst.

Der erfindungsgemäße kupplungsgebundene Fahrzeugheckträger hat demzufolge ein an eine Fahrzeugkupplung montierbares Kupplungselement, das an einen Hauptquerträger in dessen Mittelabschnitt vorzugsweise durch Schweißen fixiert ist.

Das Kupplungselement entspricht hinsichtlich seiner Funktion im wesentlichen den aus dem Stand der Technik bekannten Kupplungselementen zur Montage von Heckträgern an fahrzeugseitigen Kugelkopfkupplungen. Derartige Kupplungselemente bestehen im allgemeinen aus zwei Kugelhalbschalen, die über einen manuell betätigbaren Hebelmechanismus zusammenpreßbar sind und dabei den Kugelkopf der Fahrzeugkupplung zwischen sich einspannen sowie einer justierbaren Abstützvorrichtung, d.h. einer sogenannten Halsgabel, die mit dem Kupplungshals der Fahrzeugkupplung in Eingriff bringbar ist und die Trägerkonstruktion justierbar, d.h manuell nach hinten abklappbar abstützt, ohne daß hierfür die Kupplung gelöst werden muß. Ein derartiges Kupplungselement ist beispielsweise in dem eingangs benannten Stand der Technik beschrieben und wird ferner in einer konstruktiv anderen Ausführungsform von der Erfinderin selbst seit Jahren bei dem als "EURO CLASSIC" bekannten Heckträger erfolgreich eingesetzt, so daß an dieser Stelle auf diesen Stand der Technik verwiesen werden kann.

An den Endabschnitten des Hauptquerträgers ist jeweils ein Gelenkgestänge bestehend aus über Scharniere an den Hauptquerträger angelenkten Tragarmen angeordnet, welche gemeinsam die verlängerbare Trägerkonstruktion bilden.

Der Vorteil dieser Anordnung, d.h. das Anscharnieren zweier Gelenkgestänge an den zentralen Hauptquerträger besteht darin, daß hierdurch eine insgesamt verwindungssteife Gesamtkonstruktion entsteht, bei der die beiden Gelenkgestänge selbst nur auf Biegung nicht jedoch wie im Stand der Technik zusätzlich auf Torsion belastet werden. Die Gelenkgestänge, insbesondere deren Drehscharniere sind wesentlich schmutzunempfindlicher als beispielsweise Teleskopmechanismen und neigen weniger dazu, zu Verklemmen. Insofern ist deren Funktionsfähigkeit auch unter größeren Belastungen einem Teleskopmechanismus überlegen.

Der für ein Verschwenken der Gelenkgestänge notwendige Raum wird durch den Hauptquerträger unter Ausnutzung der Fahrzeugbreite geschaffen, so daß der erfindungsgemäße Fahrzeugheckträger in zusammengeklapptem Zustand nur gering nach hinten auskragt.

Die Weiterbildung des Erfindungsgegenstands nach Anspruch 2 sieht vor, daß jedes Gelenkgestänge aus zumindest einem ersten Tragarm besteht, der an seinem einen, inneren Ende über ein erstes Scharniergelenk an dem jeweiligen Endabschnitt des Hauptquerträgers angelenkt ist, und dessen Schwenkebene im wesentlichen parallel zum Hauptquerträger liegt. Hierbei ist es vorteilhaft, daß jedes Gelenkgestänge einen zweiten Tragarm hat, der an seinem einen, inneren Ende an dem freien, äußeren Ende des ersten Arms über ein weiteres, zweites Scharniergelenk angeschlossen ist und dessen Schwenkebene parallel zur Schwenkebene des ersten Tragarms ausgerichtet ist.

Besonders günstig erweist sich dieser Aufbau bei einem kupplungsgebundenen Zweiradheckträger dieser Gattung, bei dem an den äußeren Endabschnitten des Hauptquerträgers jeweils eine erste Trägerplattform montiert ist, die sich über eine bestimmte Länge entlang des Hauptquerträgers erstrecken, derart, daß zwischen den ersten Trägerplattformen ein Zwischenabstand entlang des Hauptquerträgers verbleibt. Gemäß Anspruch 5 ist es hierbei vorgesehen, daß an dem jeweils freien, äußeren Ende jedes ersten Tragarms eine weitere, zweite Trägerplattform angeordnet ist, derart, daß sie bei einem nach innen Verschwenken der ersten Arme in Richtung zum Hauptquerträger in dem Zwischenabstand zwischen den ersteh Trägerplattformen im wesentlichen auf deren Ebene plazierbar sind. Die erste und zweite Trägerplattform jedes Gelenkgestänges dient als eine Radauflagerschiene oder zur Befestigung einer externen Radauflagerschiene, deren Längen derart bestimmt sind, daß die zweiten Radauflagerschienen in nach innen verschwenkter Position der ersten Arme in den Zwischenabstand der ersten Radauflagerschienen einfügbar sind.

Durch diese Ausbildung verkürzt sich die Gesamtlänge des erfindungsgemäßen Trägers, da die Aufbauten zur Auflagerung einer Last, in diesem Fall die Radauflagerschienen, in zusammengeklapptem Zustand nicht hintereinander sondern nebeneinander in Fahrzeugbreitenrichtung, darüber hinaus im wesentlichen auf einer Ebene angeordnet werden, wodurch eine maximale Kompaktheit des Trägers erzielt wird.

Um die Funktionsfähigkeit weiter zu erhöhen, ist es nach Anspruch 7 vorgesehen, daß die zweiten Trägerplattformen drehbar an den Enden der ersten Tragarme, vorzugsweise an den Scharnierbolzen der zweiten Scharniergelenke gelagert sind. Zusätzlich ist nach Anspruch 8 ein Parallelschwenkmechanismus für die zweite Trägerplattform jedes Gelenkgestänges bestehend aus einer Drehbewegungsausgleichsstange vorgesehen, die an einem Endabschnitt schwenkbar an einem ortsfest am Hauptquerträger fixierten, vorzugsweise angeschweißten Hebel angelenkt ist und an ihrem anderen Ende an der jeweils zweiten Trägerplattform in einem bestimmten Abstand zu deren Drehmittelpunkt schwenkbar angelenkt ist, derart, daß nach dem Prinzip eines Parallelogramm-Gelenkgestänges bei einem Verschwenken des jeweils ersten Arms die Drehbewegungsausgleichsstange eine Gegendrehbewegung der zweiten Trägerplattform bewirkt, welche so bemessen ist, daß die zweite Trägerplattform im wesentlichen die gleiche Ausrichtung beibehält.

Lediglich durch Verschwenken der Tragarme werden somit quasi automatisch die zweiten Trägerplattformen bzw. die zweiten Radauflagerschienen in die richtige Position gegengedreht, um sich so platzsparend zwischen die ersten Trägerplattformen an den Endabschnitten des Hauptquerträgers zwischenzufügen. Ein zusätzliches Justieren oder Einpassen der zweiten Trägerplattformen entfällt somit vollständig, da sämtliche Trägerplattformen selbsttätig ihre richtige Relativposition beibehalten.

Durch die vorstehend beschriebene Konstruktion ist es erfindungsgemäß möglich, daß die freien, äußeren Enden der zweiten Tragarme über einen Nebenquerträger miteinander verbunden sind, der an den freien Enden jedes zweiten Arms drehbar anscharniert ist. Dabei hat der Nebenquerträger gemäß Anspruch 10 eine dritte Trägerplattform, die als Radauflagerschiene ausgebildet oder zur Befestigung einer externen Radauflagerschiene ausgebildet ist. Die dritte Tragerplattform ist vorteilhaft an den freien, äußeren Enden der zweiten Arme in einer bezüglich der ersten und zweiten Trägerplattformen erhöhten Ebene angeordnet, so daß die dritte Trägerplattform über die ersten und zweiten Trägerplattformen hinweg bewegbar ist. Trotz der Anordnung von drei Trägerplattformen kann die Vorrichtung somit auf die Breite einer einzigen Trägerplattform verkürzt werden, ohne daß der Fahrzeugheckträger in zusammengeklapptem Zustand hoch baut. Ein Betätigen beispielsweise der Heckklappe des Fahrzeugs wird somit nicht wesentlich behindert.

Weitere vorteilhafte Ausgestaltungen der Erfindung sind Gegenstand der übrigen Unteransprüche.

Die Erfindung wird nachstehend anhand bevorzugter Ausführungsbeispiele unter Bezugnahme auf die begleitenden Zeichnungen näher erläutert.
Es zeigen:
Fig. 1 die Perspektivenansicht der inneren Rahmenkonstruktion eines kupplungsgebundenen Fahrzeugheckträgers gemäß einem ersten bevorzugten Ausführungsbeispiel der Erfindung in ausgefahrenem Zustand,
Fig. 2 die Perspektivenansicht der inneren Rahmenkonstruktion des kupplungsgebundenen Fahrzeugheckträgers gemäß Fig. 1 in eingefahrenem Zustand,
Fig. 3 die Perspektivenansicht einer Verschalung bzw. einer Außenhaut für die Rahmenkonstruktion des erfindungsgemäßen Fahrzeugheckträgers nach Fig. 1,
Fig. 4 die Perspektivenansicht eines Trägerabschnitts mit Montagepodesten zur Befestigung von Auflagerschienen für Zweiräder gemäß dem ersten Ausführungsbeispiel,
Fig. 5a bis 5d einzelne Lager- bzw. Transportpositionen in chronologischer Aufeinanderfolge der Heckträgers gemäß dem ersten Ausführungsbeispiel,
Fig. 6. die Perspektivenansicht der inneren Rahmenkonstruktion eines kupplungsgebundenen Fahrzeugheckträgers gemäß einem zweiten bevorzugten Ausführungsbeispiel der Erfindung in ausgefahrenem Zustand,
Fig. 7 die Perspektivenansicht der inneren Rahmenkonstruktion des kupplungsgebundenen Fahrzeugheckträgers gemäß Fig. 6 in eingefahrenem Zustand und
Fig. 8a und 8b die Seitenansicht der Fahrzeugheckträgers gemäß einem dritten bevorzugten Ausführungsbeispiel in aufgefahrenem und eingefahrenem Zustand.

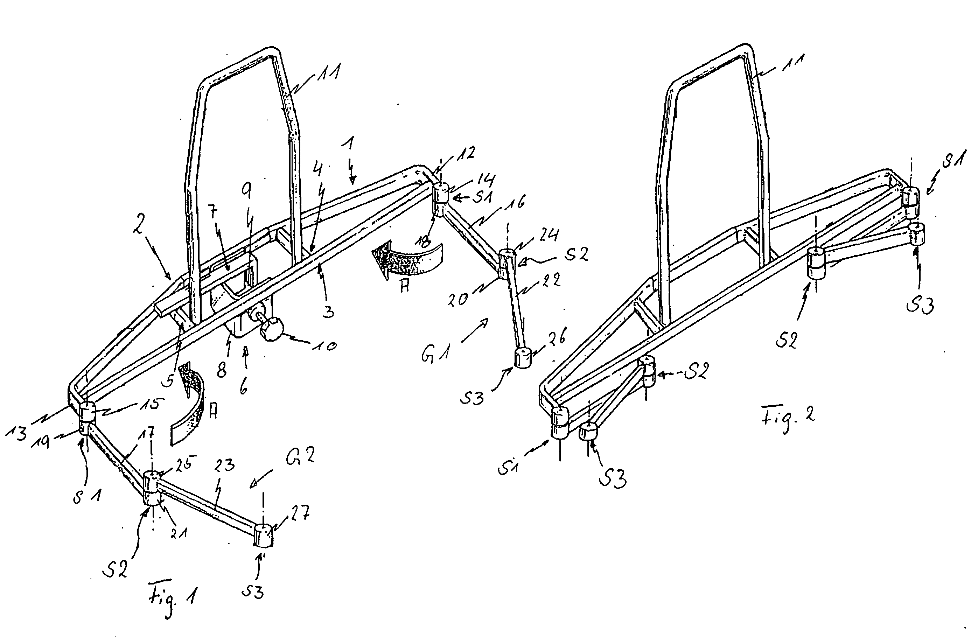

Gemäß der Fig. 1, welche das Gerippe oder Chassis des Fahrzeugheckträgers gemäß dem ersten bevorzugten Ausführungsbeispiel der Erfindung zeigt, hat der Fahrzeugheckträger einen Hauptquerträger 1 als zentrales Bauelement, der aus zwei Holmen 2, 3 mit Rechteckhohlprofil besteht, die in der Draufsicht ein Trapez aufspannen und an ihren Enden miteinander verschweißt sind. Aus Stabilitätsgründen sind die beiden Holme 2, 3 in ihren Mittenabschnitten, in denen sie den größten Parallelabstand zueinander aufweisen, über daran angeschweißte Streben 4, 5 ausgesteift, welche die Holme 2, 3 miteinander verbinden und somit eine Art Gitterkonstruktion bilden. Des weiteren ist an den Holmen 2, 3 in deren Mitte ein Kupplungselement 6 bekannter Bauart angeschweißt.

Lediglich zum besseren Verständnis ist das Kupplungselement 6 mit seinen wichtigsten Teilen in der Fig. 1 dargestellt.

Demzufolge besteht das Kupplungselement 6 aus einem Kniehebel 7 mit Handgriff, der über eine Kraftübertragungsmechanik (nicht gezeigt) mit einer verschwenkbar an einem Kupplungselementengehäuse 8 gehaltenen Kugelkalotte bzw. Kugelhalbschale 9 in Eingriff ist. Diese schwenkbare Kugelkalotte 9 liegt gegenüber einer fest am Gehäuse fixierten Kugelkalotte (in der Fig. 1 nicht zu sehen), um dazwischen den Kugelkopf einer nicht weiter dargestellten Fahrzeugkupplung einzuspannen. In Fig. 1 ist ferner eine Stellschraube 10 mit Handrad zu sehen, welche systematisch eine Justier- und Abklappeinrichtung darstellt. Diese Stellschraube 10 wirkt mit dem Kupplungshals der Fahrzeugkupplung zusammen, um den Träger nach hinten abzustützen und Drehkräfte in die Fahrzeugkupplung einzuleiten.

Wie vorstehend bereits angedeutet wurde, sind derartige Kupplungselemente für Heckträger aus dem Stand der Technik hinlänglich bekannt, so daß an dieser Stelle auf eine weitere Beschreibung verzichtet werden kann.

An den Streben 4, 5 ist zusätzlich ein Haltebügel 11 über ein Scharnier befestigt, der sich in ausgeklapptem und arretiertem Zustand im wesentlichen senkrecht zu dem von den beiden Holmen 2, 3 aufgespannten Trapez erstreckt und in eine Lagerposition umgelegt werden kann, in der er auf dem hinteren, dem Kupplungselement bzw. zum Fahrzeugheck abgewandten Holm 2 aufliegt.

An den miteinander verschweißten Enden der beiden Holme 2, 3 ist jeweils ein nach hinten sich erstreckender Auslegerstummel 12, 13 vorgesehen, die durch Umbiegen der Endabschnitte des vorderen Holms 2 um die Enden des hinteren Holms 3 gebildet sind, wobei diese Auslegerstummel 12, 13 durch den stirnseitig daran anstoßenden und angeschweißten hinteren Holm 3 ausgesteift wird. An den Enden jedes Auslegerstummels 12, 13 ist jeweils eine erste Lagerbuchse 14, 15 angeschweißt, die senkrecht zu dem vom Hauptquerträger 1 aufgespannten Trapez ausgerichtet sind. In den ersten Buchsen 14, 15 sind Scharnierbolzen gelagert, an denen jeweils ein erster Tragarm 16, 17 angelenkt ist. Die ersten Tragarme 16, 17 haben hierfür an ihren einen, inneren Enden jeweils eine Lagerbuchse 18, 19, in denen die Scharnierbolzen ebenfalls gelagert sind, derart, daß sich die Lagerbuchsen 18, 19 der ersten Tragarme 16, 17 unterhalb der ersten Lagerbuchsen 14, 15 des Hauptquerträgers 1 anordnen und gemeinsam jeweils ein erstes Scharniergelenk S1 bilden.

An den freien, äußeren Enden der ersten Tragarme 16, 17 sind weitere Lagerbuchsen 20, 21 stirnseitig angeschweißt, in denen zweite Scharnierbolzen gelagert sind. An diesen zweiten Scharnierbolzen sind zweite Tragarme 22, 23 angelenkt, die hierfür an ihren einen inneren Enden daran angeschweißte Lagerbüchsen 24, 25 aufweisen, die auf die zweiten Scharnierbolzen aufgesteckt sind und somit zweite Scharniergelenke S2 bilden. Die zweiten Tragarme 22, 23 befinden sich somit im wesentlichen auf der gleichen Ebene, wie der Hauptquerträger 1, wobei sich die ersten Tragarme 16, 17 unterhalb dieser Ebene anordnen.

An die freien, äußeren Enden der zweiten Tragarme 22, 23 sind weitere Lagerbüchsen 26, 27 stirnseitig angeschweißt, in denen dritte Scharnierbolzen eingesetzt sind. Die ersten und zweiten Tragarme 16, 17; 22, 23 samt deren Scharnierbuchsen auf jeder Seite des Hauptquerträgers 1 bilden jeweils ein Gelenkgestänge G1, G2 bzw. die verlängerbare Trägerkonstruktion des Heckträgers.

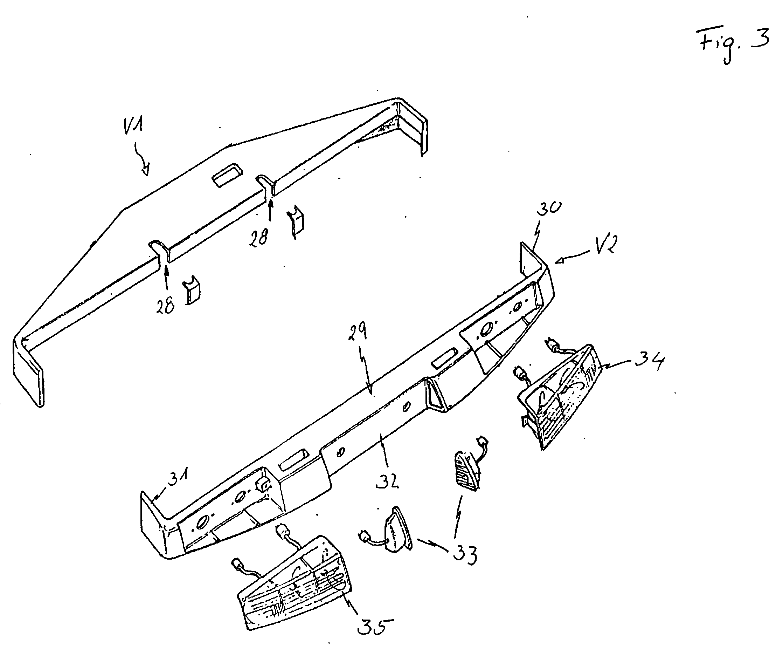

Wie in den Fig. 1 und 2 prinzipiell dargestellt ist, können die beiden Gelenkgestänge G1, G2 aus ihrer verlängerten Position nach Innen gemäß dem in Fig. 1 angedeuteten Pfeil A in Richtung zum Hauptquerträger 1 umgelegt bzw. verschwenkt werden, wobei die ersten Tragarme 16, 17 an den ersten Scharnieren S1 nach Innen geschwenkt und die zweiten Tragarme 22, 23 gegenläufig an den zweiten Scharnieren S2 nach Außen geschwenkt werden, so daß die dritten Scharniere S3 während dieser kombinierten Bewegung im wesentlichen den gleichen Abstand zueinander beibehalten und sich am Ende der Schwenkbewegung an den ersten Scharnieren S1 bzw. an den ersten Tragarmen 16, 17 anlegen.

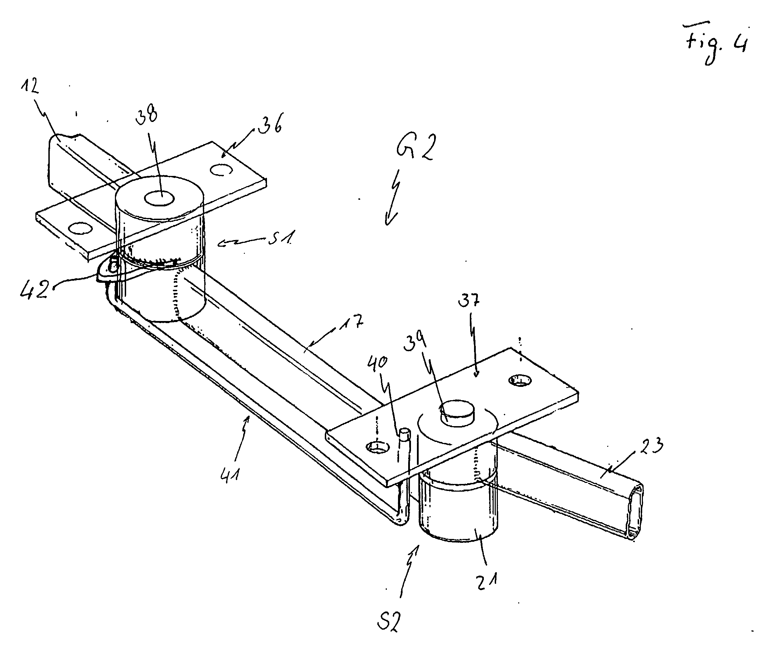

Die Fig. 3 zeigt eine Verkleidung des vorstehend beschriebenen Gerippes des erfindungsgemäßen Fahrzeugheckträgers.

Diese Verkleidung besteht aus einem Basissegment V1 vorzugsweise aus einem Glas- oder Kohlefaserverbundwerkstoff, das in Draufsicht dem trapezförmigen Grundriß des Hauptquerträgers 1 entspricht und eine Art Halbschale oder Haube ausbildet, die über den Hauptquerträger 1 aufgesetzt werden kann. In einem Mittenabschnitt des Basissegments V1 sind zwei schlitzförmige Ausbrüche 28 ausgebildet, durch die der umlegbare Haltebügel 11 des Hauptquerträgers 1 eingesetzt werden kann. Die Endabschnitte des Basissegments V1 sind ebenfalls den Auslegerstummeln 12, 13 des Hauptquerträgers 1 angepaßt, derart, daß die endseitigen ersten Scharnierbuchsen 14, 15 frei zugänglich sind, um ein Verschwenken der ersten Tragarme 16, 17 zu ermöglichen.

Die Verkleidung sieht ein zweites Nebensegment V2 vor, welches in der Draufsicht der Form einer allgemein bekannten Fahrzeugstoßstange angenähert ist. Hierfür besteht das Nebensegment V2 ebenfalls aus einem Kunststoffverbundwerkstoff, welches zu eine Halbschale oder Haube geformt ist. Diese Haube bildet einen langgezogenen schlanken Mittelteil 29, der endseitig zu zwei Laschen 30, 31 umgeformt ist. Die Länge des Mittelteils 29 ist derart dimensioniert, daß das Nebensegment V2 quasi auf das Basissegment V1 aufsteckbar ist, wobei die beiden Laschen 30, 31 des Nebensegements V2 die ersten Scharniere S1 und Auslegerstummel 12, 13 sowie das Basissegment V1 außenseitig umgreifen und somit verschalen.

Eine Heckseite des Nebensegments V2 ist mittig zu einer Aufnahme 32 für ein Fahrzeugkennzeichen samt deren Beleuchtungseinheiten 33 und endseitig für zwei Rücklichter 34, 35 ausgeformt.

An dieser Stelle sei darauf hingewiesen, daß die in der Fig. 3 dargestellte Form der Verkleidung nur beispielhaft ist. Vielmehr ist daran gedacht, insbesondere das Nebensegment V2 des erfindungsgemäßen Fahrzeugheckträgers fahrzeugspezifisch zu gestalten, wobei die designerische Eigenart jedes Fahrzeugtyps auch in Bezug auf die Rücklichter 34 berücksichtigt wird und somit für jedes Fahrzeug ein individuelles Trägerdesign geschaffen werden kann.

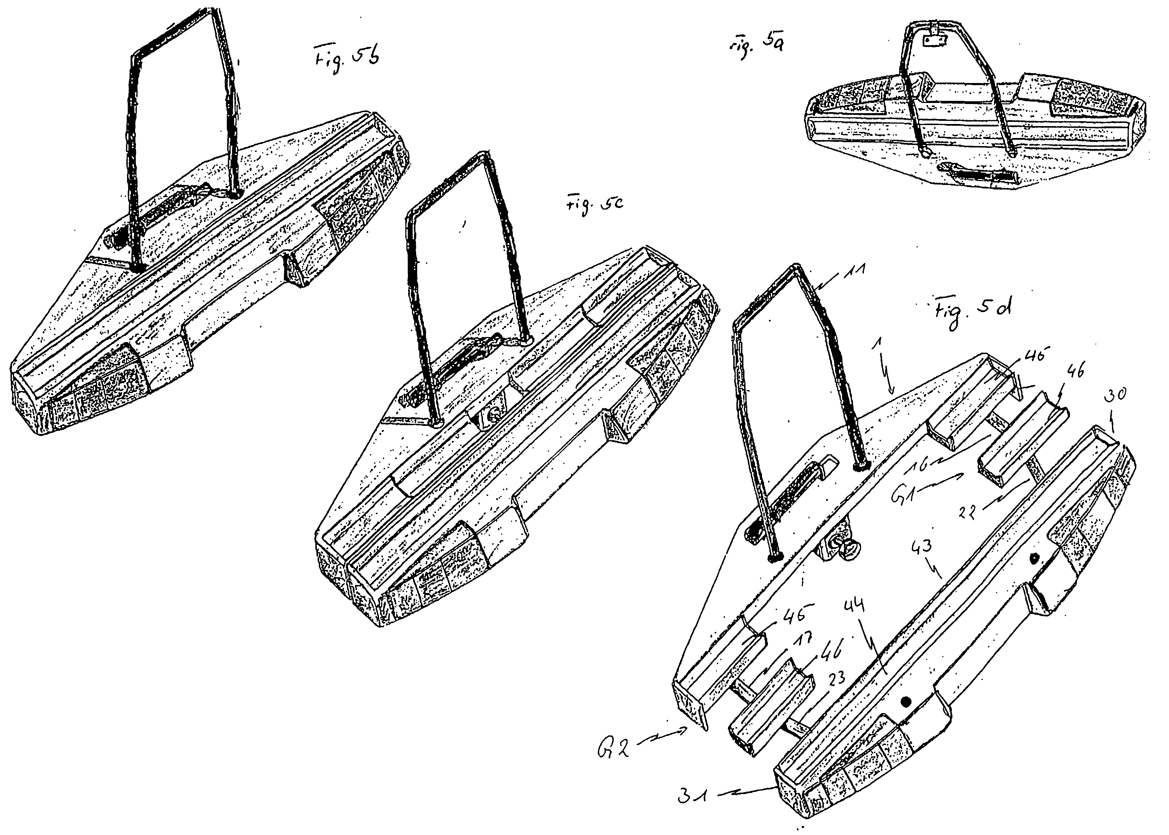

Die Fig. 4 zeigt im Detail den konstruktiven Aufbau der ersten und zweiten Scharniere S1, S2 jedes Gelenkgestänges G1, G2.

Wie aus der Fig. 4 zu entnehmen ist, sind auf den ersten und zweiten Scharnieren S1, S2 jeweils eine Montageplattform 36, 37 angeordnet. Jede Plattform 36, 37 wird dabei von einer rechteckigen Aluminium- oder Metallplatte gebildet, die in ihrer Mitte ein Durchgangsloch 38, 39 aufweist, mit welchem jede Platte 36, 37 auf den Scharnierbolzen des zugehörigen Scharniers S1, S2 aufgesteckt ist. Insbesondere die zweiten Montageplattformen 37 sind auf den Scharnierbolzen der zweiten Scharniere S2 drehbar gehalten und weisen in einem bestimmten Abstand zum Durchgangsloch 39 eine Anlenkstelle in Form einer Bohrung 40 für das drehbare Anlenken einer Drehbewegungsausgleichsstange 41 auf.

Die Drehbewegungsausgleichsstange 41 besteht aus einem Stab mit Rundvollprofil, der an seinen Enden rechtwinklig entgegengesetzt zueinander abgebogen ist, wodurch eine S-ähnliche Form entsteht. Das eine abgebogene Ende ist in die Bohrung 40 der zweiten Montageplatte 37 eingesteckt und mittels eines Sicherungsrings gegen ein axiales Verschieben oder Lösen gesichert. Das andere abgebogene Ende der Drehbewegungsausgleichsstange 41 ist an einem Hebel 42 drehbar gelagert, der an dem Hauptquerträger 1 angeschweißt ist. Die Länge des Hebels 42, bzw. der bezüglich des Hauptquerträgers 1 ortsfeste Anlenkpunkt der Drehbewegungsausgleichsstange 41 im Hebel 42 jedes Gelenkgestänges G1, G2 ist derart bestimmt, daß bei einem Verschwenken des ersten Tragarms 16, 17 die Drehbewegungsausgleichsstange 41 eine Drehbewegung der zweiten Montageplattform 37 in entgegengesetzte Drehrichtung jedoch mit im wesentlichen gleicher Drehwinkelgeschwindigkeit bezüglich ihres Drehpunkts d.h. des zweiten Scharnierbolzens bewirkt, so daß die zweite Montageplattform 37 jedes Gelenkgestänges G1, G2 ihre Ausrichtung bei jeder Drehwinkelposition des ersten Tragarms 16, 17 unverändert beibehält. In anderen Worten ausgedrückt, verbleiben die ersten und zweiten Montagplattformen 36, 37 der Gelenkgestänge G1, G2 in einer parallelen Relativlage zueinander unabhängig von der Schwenkposition der jeweils ersten Tragarme 16, 17.

In den Fig. 5a bis 5d ist der komplette Aufbau des erfindungsgemäßen Heckträgers sowie dessen einzelne mögliche Transportstellungen als Radträger für in diesem Fall drei'Räder dargestellt.

Wie aus diesen Figuren 5a bis 5d zu entnehmen ist, sind die freien, äußeren Enden der zweiten Tragarme 22, 23 über die daran angeschweißten Lagerbuchsen 26, 27 und die darin eingesteckten Scharnierbolzen an einen Nebenquerträger 43 an dessen gegenüberliegenden Endabschnitten anscharniert. Zwischen den dritten Scharnieren S3 und dem Nebenquerträger 43 sind vertikale Abstandshalter (nicht gezeigt) angeordnet, die den Nebenquerträger 43 in eine bezüglich der ersten und zweiten Montageplattformen 36, 37 erhöhte Ebene verlagern. Die Anlenkung der dritten Scharnierbolzen erfolgt über zwei Schlitzlöcher (nicht gezeigt), die an den Enden des Nebenquerträgers 43 ausgebildet sind und sich in diesem bevorzugten Ausführungsbeispiel quer zum Nebenquerträger 43, d.h. in Fahrzeuglängsrichtung erstrecken.

Der Nebenquerträger 43 hat oder bildet eine über die gesamte Breite der Heckträgers verlaufende dritte Radauflagerschiene 44, die in das Nebensegment V2 sowie die daran ausgeformten Laschen 30, 31 eingesetzt und somit an drei Seiten verschalt ist. Auf den ersten und zweiten Montageplattformen 36, 37 jedes Gelenkgestänges G1, G2 sind ebenfalls erste und zweite Radauflagerschienen 45, 46 aufgeschraubt oder genietet, deren Länge jedoch wesentlich kürzer ist, als die Länge der dritten Radauflagerschiene 44, d.h. als die Länge des Haupt- und Nebenquerträgers 43, so daß zwischen den ersten Radauflagerschienen 45, 46, welche mit dem Hautquerträger 1 endseitig fest verbunden sind, ein Zwischenabstand entlang des Hauptquerträgers 1 ausgebildet wird.

Wie insbesondere in der Fig. 5c zu erkennen ist, sind die Längen der ersten und zweiten Radauflagerschienen 45, 46 so gewählt, daß sich in nach Innen geschwenktem Zustand der beiden Gelenkgestänge G1, G2 die zweiten Radauflagerschienen 46 in Breitenrichtung des Heckträgers gesehen neben den ersten Radauflagerschienen 45 in dem Zwischenabstand nahezu auf einer Ebene plazieren und somit die Länge der ersten Auflagerschienen 45 um die Länge der zweiten Auflagerschienen 46 ergänzen. Die parallele Relativlage der ersten und zweiten Radauflagerschienen 45, 46 wird dabei, wie vorstehend beschrieben, durch die Drehbewegungsausgleichsstangen 41 beibehalten.

Die Überhöhung des Nebenquerträgers 43 bezüglich der ersten und zweiten Radauflagerschienen 45, 46 ist dabei derart bestimmt, daß der Nebenquerträger 43 über die ersten und zweiten Radauflagerschienen 45, 46 hinweg bewegt werden kann.

Die Funktionsweise des erfindungsgemäßen Heckträgers wird nachfolgend beschrieben:

Gemäß der Fig. 5d befindet sich der Heckträger in einer Transportstellung mit maximaler Ladefläche. In dieser Stellung ist der Haltebügel 11 senkrecht zum Hauptquerträger 1 aufgeklappt und in dieser Position arretiert. Die Gelenkgestänge G1, G2 sind nach außen weg vom Hauptquerträger 1 verschwenkt, wodurch sich die zweiten Radauflagerschienen 46 in einem Parallelabstand entsprechend der Länge der ersten Tragarme 16, 17 in Fahrzeuglängsrichtung hinter den ersten Radauflagerschienen 45 plazieren. Der Nebenquerträger 43 ist schubladenförmig entlang der nicht gezeigten Querschlitze an den dritten Scharnierbolzen nach hinten ausgezogen, um so einen Abstand zu den zweiten Radauflagerschienen 46 in Fahrzeuglängsrichtung zu haben. In dieser Stellung können drei Fahrräder oder dergleichen Zweiräder auf den Radauflagerschienen 45, 46, 44 abgestellt und mittels geeigneter Halterungen beispielsweise an dem Haltebügel 11 fixiert werden.

Um nunmehr den Heckträger in eine erste verkürzte Position gemäß der Fig. 5c beispielsweise zum Transport von nur zwei Fahrrädern zu überführen, werden die Gelenkgestänge G1, G2 betätigt, indem die ersten Tragarme 16, 17 nach Innen und die zweiten Tragarme 22, 23 gegenläufig nach Außen verschwenkt werden, wobei die Schwenkbewegungen beider Gelenkgestänge G1, G2 durch den Nebenquerträger 43 synchronisiert wird. Bei dieser Bewegung verlagern sich die zweiten Radauflagerschienen 46 nach Innen in den Zwischenabstand neben die ersten Radauflagerschienen 45 und die dritte Radauflagerschiene 44 hinter und oberhalb den ersten und zweiten Radauflagerschienen 45, 46. D.h. in dieser Stellung entspricht die Auskraglänge des Heckträgers der Breite des Haupt- und Nebenquerträgers 1, 43 samt zugehöriger Verschalung sowie der Breite der ersten bzw. zweiten Radauflagerschienen 45, 46.

Soll lediglich ein Fahrrad transportiert werden, wird der Nebenquerträger 43 entlang der Querschlitze an den dritten Scharnierbolzen in Richtung zum Hauptquerträger 1 schubladenartig verschoben, wobei der Nebenquerträger 43 bzw. die dritte Radauflagerschiene 44 über die ersten und zweiten Radauflagerschienen 45, 46 hinweg fährt, bis das Nebensegment V2 der Verkleidung an dem Hauptsegment V1 anliegt. In dieser Stellung, welche gleichzeitig auch die kompakteste Position des Heckträgers darstellt, umgreifen die Laschen 30, 31 des Nebensegments V2 das Hauptsegment V1 insbesondere im Bereich der Auslegerstummel 12, 13 des Hauptquerträgers 1 sowie der ersten und zweiten Radauflagerschienen 45, 46, die auf den Auslegerstummeln 12, 13 oder den ersten Scharnieren S1 montiert sind, um so eine im wesentlichen geschlossene Oberfläche zu bilden.

Soll der Heckträger abgestellt werden, wird der Haltebügel 11 nach hinten, d.h. zum hinteren Holm 3 des Hauptquerträgers 1 gemäß Fig. 5a umgelegt und der Träger an seiner Vorderkante, d.h. an dem vorderen Holm 2 auf dem Boden hochkant und platzsparend abgesetzt.

An dieser Stelle sei darauf hingewiesen, daß die Gelenkgestänge G1, G2 bzw. deren Scharniere S1, S2 mit geeigneten Arretiervorrichtungen versehen sind, um die Tragarme 16, 17; 22, 23 in den jeweiligen Winkelpositionen zu fixieren. Gleiches gilt auch für den Nebenquerträger 43. Ferner ist es nicht unbedingt notwendig, den Haupt- und Nebenquerträger 1, 43 aus einer Gitterkonstruktion mit Verschalung aufzubauen. Alternativ hierzu, könnte die Verschalung selbst als selbsttragende Kunststoffkonstruktion ausgebildet oder die Gitterkonstruktion durch einen Biegebalken ersetzt werden.

Auch können die quer zum Nebenquerträger 43 verlaufenden Schlitze durch längs zum Nebenquerträger 43 verlaufende Schlitze ersetzt werden. In diesem Fall wäre die alleinige Bewegung des Nebenquerträgers 43 zur Überführung des Heckträgers aus der Position gemäß der Fig. 5c in die Position gemäß der Fig. 5b nicht schubladenförmig sondern mit einer Drehbewegung der zweiten Tragarme 22, 23 bei ruhenden ersten Tragarmen 16, 17 gekoppelt. Hierbei müssen sich die dritten Scharniere S3 zwangsläufig aufeinander zu bewegen, wobei diese Bewegung durch die längs verlaufenden Schlitze ermöglicht wird.

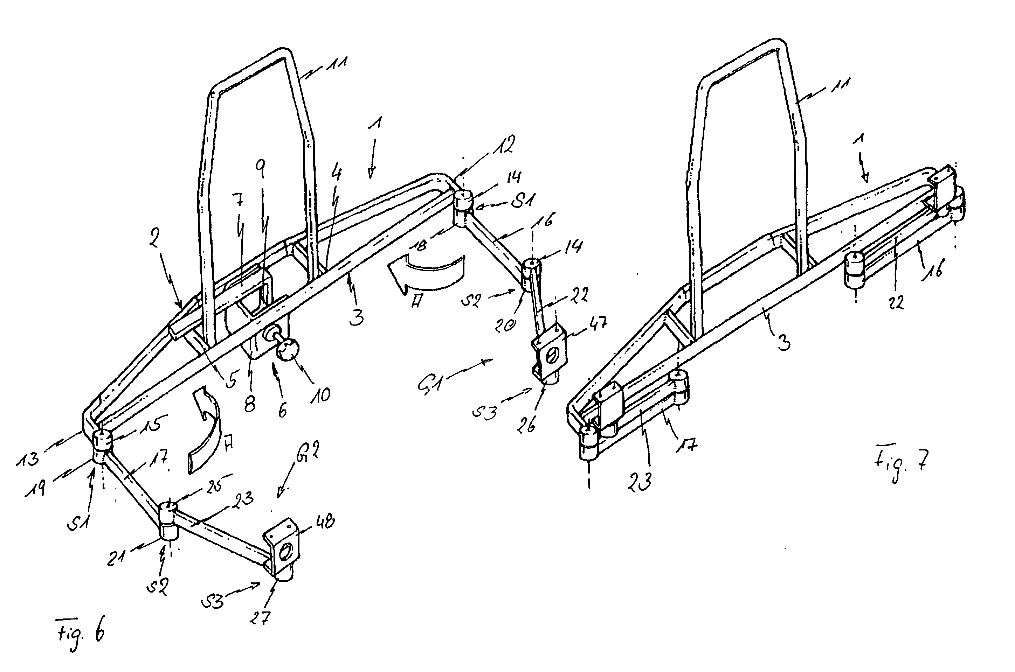

In den Fig. 6 und 7 ist ein zweites bevorzugtes Ausführungsbeispiel der Erfindung dargestellt, wobei nachfolgend lediglich auf die zum ersten Ausführungsbeispiel unterschiedlichen konstruktiven Merkmale eingegangen wird, während alle übrigen Merkmale jenen des ersten Ausführungsbeispiels entsprechen. Im übrigen werden für die gleichen Bauteile die gleichen Bezugszeichen verwendet.

Die zweiten Tragarme 22, 23 des Heckträgers gemäß der Fig. 6 und 7 sind gegenüber den ersten Tragarmen 16, 17 verkürzt, so daß beim Zusammenklappen oder Ausfahren der Gelenkgestänge G1, G2 die zweiten Tragarme mitsamt den äußeren, dritten Scharnieren S3 über die zweiten Tragarme hinweggeschwenkt werden können, wie die in der Fig. 7 angedeutet ist. An den dritten Scharnieren sind Montageplattformen 47, 48 drehbar angelenkt, an denen der Nebenquerträger (nicht dargestellt) fixiert ist. Diese Montageträger 47, 48 weisen im Querschnitt ein U-förmiges Profil auf, wobei sie an einer ihrer Schenkel, also hochkant, an den dritten Scharnieren S3 montiert sind.

Im fertigen Zustand, d.h. bei aufgeschraubtem oder genietetem Nebenquerträger weist die U-förmige Einbuchtung in Richtung zum Hauptquerträger 1, wobei die Ausbuchtung, bzw. die Öffnungsweite und Tiefe des U-Profils derart bestimmt ist, daß der hintere Holm 3 des Hauptquerträgers 1 samt den ersten Radauflagerschienen zwischen die Schenkel des U-Profils paßt.

Werden nunmehr die Gelenkgestänge G1, G2 aus der ausgefahrenen Position gemäß der Fig. 6 in die maximal kompakte Position gemäß der Fig. 7 zurückgezogen, dann legen sich wie im ersten Ausführungsbeispiel die zweiten Radauflagerschienen in Breitenrichtung des Trägers neben die ersten Radauflagerschienen nahezu auf der gleichen Ebene an. Da die zweiten Tragarme 22, 23 kürzer sind als die ersten Tragarme 16, 17 können diese unmittelbar oberhalb der ersten Tragarme 16, 17 plaziert werden, wobei sich der Nebenquerträger ebenfalls oberhalb der ersten und zweiten Radauflagerschienen befindet. In diesem Zustand sind die ersten Radauflagerschienen teilweise in das U-Profil der dritten Montageplattformen 47, 48 versenkt,, so daß eine Stellung aller drei Radauflagerschienen erreichbar ist, wie sie in der Fig. 5d dargestellt ist.

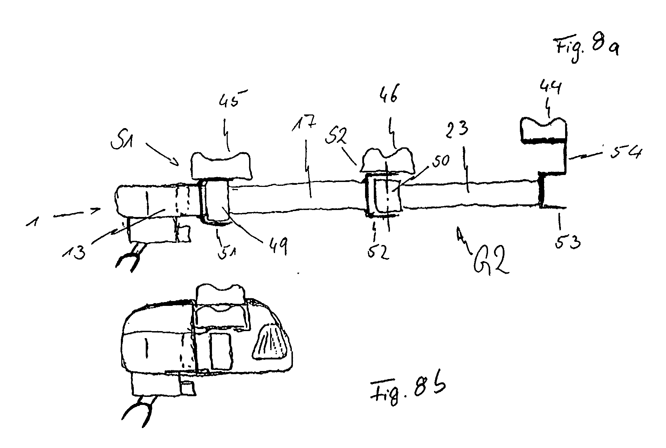

In den Fig. 8a und 8b ist ein drittes bevorzugtes Ausführungsbeispiel der Erfindung dargestellt, wobei nachfolgend ebenfalls nur auf die zum ersten Ausführungsbeispiel unterschiedlichen konstruktiven Merkmale eingegangen wird, während alle übrigen Merkmale jenen des ersten Ausführungsbeispiels entsprechen. Es werden ferner für die gleichen Bauteile die gleichen Bezugszeichen verwendet.

Gemäß der Fig. 8a sind die Tragarme 16, 17, 22, 23 der zwei Gelenkgestänge G1, G2 auf einer Ebene angeordnet, wobei die Scharniere S1, S2 jeweils aus einer Lagerbüchse 49, 50 bestehen, die in einer Gelenkgabel 51, 52 drehbar über jeweils einen Scharnierbolzen (nicht gezeigt) gehalten ist. In anderen Worten ausgedrückt ist an jedem Auslegerstummel 12, 13 stirnseitig eine Lagergabel 51 angeschweißt. Jeder Tragarm 16, 17, 22, 23 hat an einem Ende eine Lagerbüchse 49, 50 und an dem anderen Ende eine Lagergabel 51, 52. D.h. sämtliche Tragarme sind in diesem Fall baugleich und können nach dem Baukastenprinzip beliebig aneinander gelenkt werden. An dem äußeren freien Ende jedes zweiten Tragarms ist eine dritte Montageplattform 54 drehbar gelagert, wobei deren Form und Ausrichtung der dritten Montageplattform 48 des zweiten Ausführungsbeispiels entspricht. In diesem Fall jedoch ist die dritte Montageplattform 54 weiter diminsioniert, da sich sämtliche Tragarme im wesentlichen auf der gleichen Ebene befinden, jedoch der Nebenquerträger über die ersten und zweiten Radauflagerschienen bewegbar sein muß, wie dies anhand des ersten und zweiten Ausführungsbeispiels bereits beschrieben und in der Fig. 8b prinzipiell dargestellt wird.

Abschließend sei darauf hingewiesen, daß der erfindungsgemäße Fahrzeugheckträger in Modulbauweise konzipiert ist. D.h. es können je nach Wunsch nur erste Tragarme oder mehrere Tragarme pro Gelenkgestänge vorgesehen sein, um so die Anzahl an Transportgegenständen, beispielsweise Zweiräder zu erhöhen, bzw. die Ladefläche zu vergrößern. Auch muß nicht an jedem Scharniergelenk eine Montageplattform vorgesehen sein. Vielmehr könnte bei den vorstehend beschriebenen Ausführungsbeispielen auf die zweiten Montageplattformen 36 und somit auf die zweiten Radauflagerschienen 46 verzichtet werden um den Abstand zwischen den ersten Auflagerschienen 45 und der dritten Auflagerschiene 44 zu vergrößern, etwa beim Transport von Zweiradkrafträdern.

## Patentansprüche

1. Kupplungsgebundener Fahrzeugheckträger mit einer nach hinten verlängerbaren Trägerkonstruktion, die mittels einem Kupplungselement (6) an eine Fahrzeuganhängerkupplung montierbar ist, **gekennzeichnet durch**
einen Hauptquerträger (1), in dessen Mittelabschnitt das Kupplungselement (6) fixiert ist und an dessen Endabschnitten (12, 13) jeweils ein Gelenkgestänge (G1, G2) angeordnet ist, welches jeweils ein Element der nach hinten verlängerbaren Trägerkonstruktion bildet.

2. Fahrzeugheckträger nach Anspruch 1, **dadurch gekennzeichnet, daß**,
jedes Gelenkgestänge (G1, G2) aus zumindest einem ersten Arm (16, 17) besteht, der an seinem einen, inneren Ende über ein erstes Scharniergelenk (S1) an dem jeweiligen Endabschnitt (12, 13) des Hauptquerträgers (1) angelenkt ist, und dessen Schwenkebene im wesentlichen parallel zum Hauptquerträger (1) liegt.

3. Fahrzeugheckträger nach Anspruch 2, **dadurch gekennzeichnet, daß**
jedes Gelenkgestänge (G1, G2) einen zweiten Arm (22, 23) hat, der an seinem einen, inneren Ende an dem freien, äußeren Ende des ersten Arms (16, 17) über ein zweites Scharniergelenk (S2) angeschlossen ist und dessen Schwenkebene parallel zur Schwenkebene des ersten Arms (16, 17) ausgerichtet ist.

4. Fahrzeugheckträger nach Anspruch 2 oder 3, **dadurch gekennzeichnet, daß**
an den äußeren-Endabschnitten des Hauptquerträgers (12, 13) jeweils eine erste Trägerplattform (36) montiert ist, die sich über eine bestimmte Länge entlang des Hauptquerträgers (1) erstrecken, derart, daß zwischen den ersten Trägerplattformen (36) ein Zwischenabstand entlang des Hauptquerträgers (1) verbleibt.

5. Fahrzeugheckträger nach Anspruch 4, **dadurch gekennzeichnet, daß**
an dem jeweils freien Ende jedes ersten Arms (16, 17) eine weitere, zweite Trägerplattform (37) angeordnet ist, derart, daß sie bei einem nach Innen Verschwenken der ersten Arme (16, 17) in Richtung zum Hauptquerträger (1) in dem Zwischenabstand zwischen den ersten Trägerplattformen (36) im wesentlichen auf deren Ebene plazierbar sind.

6. Fahrzeugheckträger nach Anspruch 5, **dadurch gekennzeichnet, daß**
die erste und zweite Trägerplattform (36, 37) jedes Gelenkgestänges (G1, G2) als eine Radauflagerschiene oder zur Befestigung einer externen Radauflagerschiene (45, 46) vorgesehen ist, deren Längen derart bestimmt sind, daß die zweiten Radauflagerschienen (46) in nach Innen verschwenkter Position der ersten Arme (16, 17) in den Zwischenabstand der ersten Radauflagerschienen (45) einfügbar sind.

7. Fahrzeugheckträger nach Anspruch 5 oder 6, **dadurch gekennzeichnet, daß**
die zweiten Trägerplattformen (37) drehbar an den Enden der ersten Arme (16, 17) vorzugsweise an den zweiten Scharnieren (S2) gelagert sind.

8. Fahrzeugheckträger nach Anspruch 7, **gekennzeichnet durch** einen Parallelschwenkmechanismus für die zweite Trägerplattform (37) jedes Gelenkgestänges (G1, G2) bestehend aus einer Drehbewegungsausgleichsstange (41), die an einem Endabschnitt schwenkbar an einem ortsfest am Hauptquerträger fixierten Hebel (42) angelenkt und an ihrem anderen Ende an der jeweils zweiten Trägerplattform (37) schwenkbar angelenkt ist, derart, daß bei einem Verschwenken des jeweils ersten Arms (16, 17) die Drehbewegungsausgleichsstange (41) eine Gegendrehbewegung der zweiten Trägerplattform (37) bewirkt, welche so bemessen ist, daß die zweite Trägerplattform (37) im wesentlichen die gleiche Ausrichtung beibehält.

9. Fahrzeugheckträger nach einem der Ansprüche 3 bis 8, **dadurch gekennzeichnet, daß**
die freien, äußeren Enden der zweiten Arme (22, 23) über einen Nebenquerträger (43) miteinander verbunden sind, der an den freien Enden jedes zweiten Arms (22, 23) über dritte Scharniere (S3) jeweils anscharniert ist.

10. Fahrzeugheckträger nach Anspruch 9, **dadurch gekennzeichnet, daß**
der Nebenquerträger (43) eine weitere, dritte Trägerplattform (48, 54) umfaßt, die als Radauflagerschiene (44) ausgebildet oder zur Befestigung einer externen Radauflagerschiene ausgebildet ist.

11. Fahrzeugheckträger nach Anspruch 10, **dadurch gekennzeichnet, daß**
die dritte Trägerplattform (44) an den Enden der zweiten Arme (22, 23) derart vorgesehen ist, daß der Nebenquerträger (43) in einer bezüglich der ersten und zweiten Trägerplattformen (36, 37) erhöhten Ebene angeordnet ist, so daß der Nebenquerträger (43) über die ersten und zweiten Trägerplattformen (36, 37) hinweg bewegbar ist.

12. Fahrzeugheckträger nach Anspruch 11, **dadurch gekennzeichnet daß**
der Nebenquerträger (43) an seinen Endabschnitten zwei Schlitze hat, in denen jeweils ein Scharnierbolzen des dritten Scharniers (S3) dreh- und längs der Schlitze verschiebbar gehalten ist, wobei jeder Scharnierbolzen mit dem jeweiligen Ende der zweiten Arme (22, 23) verbunden ist.

13. Fahrzeugheckträger nach Anspruch 12, **dadurch gekennzeichnet daß**
sich die Schlitze quer zum Nebenquerträger (43) erstrecken, um ein schubladenförmiges Verschieben des Nebenquerträgers (43) an den äußeren freien Enden der zweiten Arme (22, 23) in Richtung zum Hauptquerträger (1) und entgegengesetzt zu ermöglichen.

14. Fahrzeugheckträger nach Anspruch 12, **dadurch gekennzeichnet daß**
sich die Schlitze entlang des Nebenquerträgers (43) erstrecken, um ein Verschwenken der zweiten Arme (22, 23) bei ruhenden ersten Armen (16, 17) in Richtung zum Hauptquerträger (1) und entgegengesetzt zu ermöglichen.

## Claims

1. Vehicle rear carrier, hitch-connected, with a rearwardly extendable carrier construction which is mountable on a vehicle hitch by means of a coupling element (6), **characterized by**
a main cross member (1) in whose middle section the coupling element (6) is fixed, and at each of whose end sections (12, 13) an articulated linkage (G1, G2) forming one element of the rearwardly extendable carrier construction is arranged.

2. Vehicle rear carrier according to Claim 1, **characterized in that**
each articulated linkage (G1, G2) consists of at least a first arm (16, 17) which is linked by a first hinge (S1) at its one, inner end to the respective end section (12, 13) of the main cross member (1), and whose swivelling plane lies substantially parallel with the main cross member (1).

3. Vehicle rear carrier according to Claim 2, **characterized in that**
each articulated linkage (G1, G2) has a second arm (22, 23) which is connected by a second hinge (S2) at its one, inner end to the free, outer end of the first arm (16, 17), and whose swivelling plane is orientated parallel with the swivelling plane of the first arm (16, 17).

4. Vehicle rear carrier according to Claim 2 or Claim 3, **characterized in that**
a first carrier platform (36) is mounted at each of the outer end sections of the main cross member (12, 13), extending over a specific length along the main cross member (1) so as to leave a gap between the first carrier platforms (36) along the main cross member (1).

5. Vehicle rear carrier according to Claim 4, **characterized in that**
a further, second carrier platform (37) is arranged at the free end of each first arm (16, 17) so as to be placeable in the gap between the first carrier platforms (36) and substantially on the same plane, when the first arms (16, 17) are swivelled inwards towards the main cross member (1).

6. Vehicle rear carrier according to Claim 5, **characterized in that**
the first and second carrier platforms (36, 37) of each articulated linkage (G1, G2) are provided as wheel support rails or intended for the attachment of external wheel support rails (45, 46) whose lengths are determined so that the second wheel support rails (46) are insertable into the gap between the first wheel support rails (45) in the inwards-swivelled position of the first arms (16, 17).

7. Vehicle rear carrier according to Claim 5 or Claim 6, **characterized in that**
the second carrier platforms (37) are pivotably mounted at the ends of the first arms (16, 17), preferably at the second hinges (S2).

8. Vehicle rear carrier according to Claim 7, **characterized by**
a parallel swivel mechanism for the second carrier platform (37) of each articulated linkage (G1, G2), consisting of a swing-equalizer rod (41) which is pivotably linked at one end to a lever (42) fixed to the main cross member and is pivotably linked at its other end to the respective second carrier platform (37) so that when the respective first arm (16, 17) is swivelled the swing-equalizer rod (41) causes an opposite swing of the second carrier platform (37) that is calculated to keep the orientation of the second carrier platform (37) substantially unchanged.

9. Vehicle rear carrier according to any one of Claims 3 to 8, **characterized in that**
the free outer ends of the second arms (22, 23) are interconnected by a secondary cross member (43), which is hinged to the free end of each second arm (22, 23) by a third hinge (S3).

10. Vehicle rear carrier according to Claim 9, **characterized in that**
the secondary cross member (43) comprises a further, third carrier platform (48, 54) configured as a wheel support rail (44) or configured for the attachment of an external wheel support rail.

11. Vehicle rear carrier according to Claim 10, **characterized in that**
the third carrier platform (44) at the ends of the second arms (22, 23) is provided so that the secondary cross member (43) is in a higher plane than the first and second carrier platforms (36, 37), so that the secondary cross member (43) can be drawn over the first and second carrier platforms (36, 37).

12. Vehicle rear carrier according to Claim 11, **characterized in that**
the secondary cross member (43) has two slots at its end sections in each of which a hinge pin of the third hinge (73) is held displaceably both in rotation and along the slots, each hinge pin being connected to the end of the respective second arm (22, 23).

13. Vehicle rear carrier according to Claim 12, **characterized in that**
the slots extend transversely across the secondary cross member (43) to allow the secondary cross member (43) to be displaced drawer-fashion on the outer free ends of the second arms (22, 23) towards the main cross member (1) and away from it.

14. Vehicle rear carrier according to Claim 12, **characterized in that**
the slots extend along the secondary cross member (43) to allow the second arms (22, 23) to swivel towards the main cross member (1) and away from it, with the first arms (16, 17) at rest.

## Revendications

1. Porte-bagages arrière sur crochet d'attelage de véhicule, comportant une construction de support prolongeable vers l'arrière qui peut être montée au moyen d'un élément d'accouplement (6) sur un crochet d'attelage de remorque, **caractérisé par** une traverse principale (1), l'élément d'accouplement (6) étant fixé dans son tronçon médian et une tringlerie articulée (G1, G2) est disposée sur chacun de ses tronçons terminaux (12, 13) et forme un élément de la construction de support prolongeable vers l'arrière.

2. Porte-bagages arrière de véhicule selon la revendication 1, **caractérisé en ce** chaque tringlerie articulée (G1, G2) est constituée d'au moins un premier bras (16, 17) qui est articulé, à l'une de ses extrémités intérieures, par une première articulation à charnière (S1), au tronçon terminal (12, 13) respectif de la traverse principale (1), et dont le plan de pivotement est sensiblement parallèle à la traverse principale (1).

3. Porte-bagages arrière de véhicule selon la revendication 2, **caractérisé en ce que** chaque tringlerie articulée (G1, G2) possède un deuxième bras (22, 23) qui est raccordé à l'une de ses extrémités intérieures, par une deuxième articulation à charnière (S2), à l'extrémité libre extérieure du premier bras (16, 17) et dont le plan de pivotement est orienté parallèlement au plan de pivotement du premier bras (16, 17).

4. Porte-bagages arrière de véhicule selon la revendication 2 ou 3, **caractérisé en ce que** sur chacun des tronçons terminaux extérieurs de la traverse principale (12, 13) est montée une première plate-forme de support(36) qui s'étend sur une longueur déterminée le long de la traverse principale (1), de manière qu'il reste un écartement le long de la traverse principale (1), entre les premières plates-formes de support (36).

5. Porte-bagages arrière de véhicule selon la revendication 4, **caractérisé en ce qu'**à l'extrémité libre de chaque premier bras (16, 17) est disposée une autre deuxième plate-forme de support (37) de manière qu'en cas de pivotement vers l'intérieur des premiers bras (16, 17), en direction de la traverse principale (1), elle vienne se placer, dans l'écartement entre les premières plates-formes de support (36), sensiblement sur leur plan.

6. Porte-bagages arrière de véhicule selon la revendication 5, **caractérisé en ce que** la première et la deuxième plate-forme de support (36, 37) de chaque tringlerie articulée (G1, G2) sont prévues chacune comme un rail de support de roue ou pour la fixation d'un rail de support de roue (45, 46) externe dont les longueurs sont telles que les deuxièmes rails de support de roue (46) en position pivotée vers l'intérieur des premiers bras (16, 17), puissent s'insérer dans l'écartement entre les premiers rails de support de roue (45).

7. Porte-bagages arrière de véhicule selon la revendication 5 ou 6, **caractérisé en ce que** les deuxièmes plates-formes de support (37) sont montées de manière à pouvoir tourner aux extrémités des premiers bras (16, 17), de préférence sur les deuxièmes charnières (S2).

8. Porte-bagages arrière de véhicule selon la revendication 7, **caractérisé par** un mécanisme de pivotement parallèle pour la deuxième plate-forme de support (37) de chaque tringlerie articulée (G1, G2), constitué d'une barre de compensation du mouvement de rotation (41), qui est articulée, par un tronçon terminal, de manière à pouvoir pivoter sur un levier (42) fixé de manière stationnaire sur la traverse principale, et qui, par son autre extrémité, est articulée de manière à pouvoir pivoter sur la deuxième plate-forme de support (37), de manière que lors d'un pivotement des premiers bras (16, 17), la barre de compensation du mouvement de rotation (41) provoque un mouvement de contre-rotation de la deuxième plate-forme de support (37) qui est tel que la deuxième plate-forme de support (37) conserve sensiblement la même orientation.

9. Porte-bagages arrière de véhicule selon l'une des revendications 3 à 8, **caractérisé en ce que** les extrémités libres extérieures des deuxièmes bras (22, 23) sont reliées entre elles par une traverse auxiliaire (43) qui est articulée aux extrémités libres de chaque deuxième bras (22, 23), par des troisièmes charnières (S3).

10. Porte-bagages arrière de véhicule selon la revendication 9, **caractérisé en ce que** la traverse secondaire (43) comprend une autre troisième plate-forme de support (48, 54) qui est réalisée comme rail de support de roue (44) ou pour la fixation d'un rail de support de roue externe.

11. Porte-bagages arrière de véhicule selon la revendication 10, **caractérisé en ce que** la troisième plate-forme de support (44) est prévue aux extrémités des deuxièmes bras (22, 23) de manière que la traverse secondaire (43) soit disposée dans un plan surélevé par rapport aux premières et aux deuxièmes plates-formes de support (36, 37), ce qui fait que la traverse secondaire (43) peut être déplacée au-delà des premières et deuxièmes plates-formes de support (36, 37).

12. Porte-bagages arrière de véhicule selon la revendication 11, **caractérisé en ce que** la traverse secondaire (43) présente dans ses tronçons terminaux deux fentes dans chacune desquelles un axe de charnière de la troisième charnière (S3) est maintenu de manière à pouvoir tourner et à coulisser le long des fentes, chaque axe de charnière étant relié à l'extrémité respective des deuxièmes bras (22, 23).

13. Porte-bagages arrière de véhicule selon la revendication 12, **caractérisé en ce que** les fentes s'étendent transversalement à la traverse secondaire (43) afin de permettre un coulissement à la manière d'un tiroir de la traverse secondaire (43) sur les extrémités libres extérieures des deuxièmes bras (22, 23), en direction de la traverse principale (1) et dans le sens opposé.

14. Porte-bagages arrière de véhicule selon la revendication 12, **caractérisé en ce que** les fentes s'étendent le long de la traverse secondaire (43) afin de permettre un pivotement des deuxièmes bras (22, 23), lorsque les premiers bras (16, 17) sont au repos, en direction de la traverse principale (1) et dans le sens opposé.
